Europäisches Patentamt

(19) European Patent Office

Office européen des brevets

(11) Publication number: **0 060 903**
**B1**

(12) **EUROPEAN PATENT SPECIFICATION**

(45) Date of publication of patent specification: **05.12.84**

(51) Int. Cl.³: **A 23 L 1/22,** A 23 L 1/236

(21) Application number: **81102074.2**

(22) Date of filing: **19.03.81**

(54) **A dipeptide sweetening composition and its use for sweetening food, beverages or pharmaceutical compositions.**

(43) Date of publication of application:
**29.09.82 Bulletin 82/39**

(45) Publication of the grant of the patent:
**05.12.84 Bulletin 84/49**

(84) Designated Contracting States:
**CH DE FR GB IT LI NL SE**

(56) References cited:
**DE-A-1 963 736**
**DE-A-2 556 109**
**DE-A-2 636 121**
**GB-A-1 274 288**

(73) Proprietor: **AJINOMOTO CO., INC.**
**5-8, Kyobashi 1-chome, Chuo-ku**
**Tokyo 104 (JP)**

(72) Inventor: **Okada, Yuzo**
**No. 1677-79, Koshigoe**
**Kamakura-shi Kanagawa-ken (JP)**

(74) Representative: **Schübel-Hopf, Ursula et al**
**Strehl, Schübel-Hopf, Schulz Patentanwälte**
**Widenmayerstrasse 17**
**D-8000 München 22 (DE)**

**The file contains technical information submitted after the application was filed and not included in this specification**

# 0 060 903

## Description

The present invention relates to a dipeptide sweetening composition. More particularly, the present invention is concerned with a dipeptide sweetening composition having a strength and a roundness of taste like sucrose, the sweetness of which is improved over that of dipeptide sweeteners alone.

Dipeptide sweeteners such as $\alpha$-L-aspartyl-L-phenyl-alaninemethylester are generally known as sweetening agents having a satisfying sweetness characterized by a clear initial sweet taste without an unpleasant bitter after-taste like saccharin. Problems have arisen, however by the fact, that the sweetness of dipeptide sweeteners does not last as long as that of sucrose, that they show monotonuous sweetness without full-bodyness and, moreover, tend to lack roundness in their taste quality.

Dipeptide sweeteners could find great commercial application especially as low-caloric sweeeneners, since the intensity of sweetness of dipeptide sweeteners is about 50 to 200 times or more of that of sucrose and they have no discernible unpleasant aftertaste like saccharin and other synthetic sweetening agents. There is a continuous need therefore for a dipeptide sweetening composition which can be substituted for sucrose and which has almost the same sweetness as sucrose.

Accordingly, one object of the present invention is to provide a dipeptide sweetening composition which has a more satisfactory quality of sweetness than that of dipeptide sweeteners alone.

Another object of the present invention is to provide a low-caloric dipeptide sweetening composition having a sucrose-like sweetness for various foods and beverages.

According to the present invention it has now been found that the quality in sweetness of dipeptide sweeteners can be significantly improved over that of dipeptide sweeteners alone by the coexistence of at least one kind of flavoring agents in an amount sufficient to impart a taste strength equal to that of 10 to 200% by wt of monosodium L-glutamate (MSG) based upon the weight of the dipeptide sweeteners, selected from the group consisting of sodium glutamate, sodium inosine-5'-phosphate (IMP), sodium guanosine-5'-phosphate (GMP) and sodium aspartate.

Preferred embodiments of the invention may be described as follows.

A dipeptide sweetener used in the composition of the present invention is $\alpha$-L-aspartyl-L-phenylalanine-methylester (AP) or $\alpha$-L-aspartyl-L-phenylalanine-ethylester.

Sodium glutamate, sodium inosine-5'-phosphate, sodium guanosine-5'-phosphate and sodium aspartate are used for the composition as flavoring agents.

In the preparation of the sweetening composition of the present invention, generally 10 to 200% by wt, preferably 75 to 125% by wt of MSG is employed based upon the dipeptide sweetener, or other flavoring agents alone or in combination with MSG are used in an amount sufficient to impart a strength of taste equal to the above defined amount of MSG alone. For the combined use of MSG and IMP and/or GMP, the amount of IMP and/or GMP can be given, for instance, by the following formulae (Yamaguchi S.; J. Food Sci., 32 (473) 1967 and Yamaguchi et al.; Nippon Nogeikagaku Kaishi 42 (6) (1968):

$$V = (Y-U)/1218U \qquad \text{(Formula I)}$$

$$V' = (Y-U)/2800U \qquad \text{(Formula II)}$$

$$V'' = (P+Q)(Y-U)/1218U(P+3Q) \qquad \text{(Formula III)}$$

(U: concentration (g/dl) of MSG in a solution containing MSG and IMP, MSG and GMP or MSG, IMP and GMP
Y: concentration (g/dl) of MSG in a solution containing MSG alone
V: concentration (g/dl) of IMP in a solution containing MSG and IMP
V': concentration (g/dl) of GMP in a solution containing MSG and GMP
V'': concentration (g/dl) of IMP and GMP in a solution containing MSG, IMP and GMP
P: IMP/(IMP+GMP)
Q: GMP/(IMP+GMP)).

A composition which contains flavoring agents having a tasting strength of less than 10% by wt of that of MSG based on the dipeptide sweetener, shows a pronounced tendency of lacking fulness of its sweetness compared with sucrose. Inversely, if the composition contains more than 200% by wt of MSG the sweetness becomes dim and the taste as a whole becomes heavy and inharmonious. The dipeptide sweetening composition of the present invention can be used in any form such as powder, syrup, granules or tablets. Further, it may be possible that it comprises a dipeptide sweetener in the form of powder, tablets, syrup and the like coexisting with flavoring agents in any form such as powder, granules or liquid.

The sweetening composition according to the invention may be used as a sweetener for all kinds of food, beverages or pharmaceutical compositions.

2

Typical examples for the use of the present dipeptide sweetening composition are table-use seasonings, sweetening material for bread, deserts, cakes, candies, chocolate, chewing-gum, cookies, ice-cream, sherbet or puddings, milk products or their substitutes such as coffee-whitener or whipped topping, beverages such as powdered juice or condenced juice and so on.

Having generally described this invention, a further understanding can be obtained by reference to certain specific examples which are provided by way of illustration.

Example 1

Dipeptide sweetening composition (A)

| AP | 50 part by weight |
|---|---|
| MSG | 50 |

A sweetening solution was prepared by dissolving 0.1 g of the dipeptide sweetening composition (A) in one dl of water.

Separately, a solution of AP was prepared by dissolving 0.05 g of AP in one dl of water (Control).

The two solutions were organolepticly tested by a panel of 20 members who had been specially trained for this kind of test. The panel test was performed by the paired method with the solutions. The results obtained are shown in Table 1.

TABLE 1

| | Solution containing the composition (A) | Solution containing AP alone |
|---|---|---|
| Choice | 19*** | 1 |
| Evaluation | Sweetness having a thickness and round-ness more similar to sucrose than AP alone | Characteristic sweet-ness of AP lacking thickness |

***There is a significant difference with 0.1% of risk ratio.

Example 2

Dipeptide sweetening composition (B)

| AP | 4 parts by weight |
|---|---|
| MSG | 3    ,, |
| IMP | 1    ,, |
| Cream Powder 400 ("Marim" produced by Ajinomoto Co., Inc.) | |

Coffee solution was prepared by dissolving coffee powder in 150 ml of hot water, and 4.0 g of the dipeptide sweetening composition (B) was added to the solution.

As a control, 0.04 g of AP and 4 g of cream powder ("Marim") was added to the coffee solution.

The two kinds of coffee were subjected to organoleptic testing in the same manner as described in Example 1. The results obtained are shown in Table 2.

3

0 060 903

TABLE 2

| | Coffee containing the dipeptide sweetening composition (B) | Control |
|---|---|---|
| Choice | 16* | 4 |
| Evaluation | round sweetness | monotonuous sweetness |

*There is a significant difference with 5% of risk ratio.

Example 3

Dipeptide sweetening composition (C)

| | |
|---|---|
| AP | 60 parts by weight |
| MSG | 40 ,, |

Boiled burdock was prepared by boiling 250 g of sliced burdock with 200 cc of water and 15 cc of sake for 5 minutes and then adding 0,1 g of the dipeptide sweetening composition (C) to the boiled burdock and boiling again for 15 minutes.

Separately, boiled burdock was prepared by the same manner described above using 0.06 g of AP for the dipeptide sweetening composition (C) (Control).

The two boiled samples of burdock were organoleptically tested by a panel of 10 members who has been specially trained for this kind of test. The panel test was performed by scoring method. The results obtained are shown in Table 3.

TABLE 3

| | Boiled burdock containing the dipeptide sweetening composition (C) | Control |
|---|---|---|
| Mark* (mean value) | 6.9 | 5.0 |
| Evaluation | harmonized with a strong sweetness | inharmonious sweetness can be perceived |

*On the basis of 10 points.

Example 4

Dipeptide sweetening composition (D)

| | |
|---|---|
| AP | 8 parts by weight |
| MSG | 8 ,, |
| Sodium aspartate | 16 ,, |

Hot black tea was prepared by dissolving 0.32 g of the dipeptide sweetening composition (D) and 2 g of "Marim" in 130 ml of black tea.

As a control, hot black tea was prepared by dissolving 12 g of sugar and 2 g of "Marim" in 130 ml of black tea. The two samples of black tea were organoleptically tested in the same manner as described in Example 1. The results obtained are shown in Table 4.

4

TABLE 4

| | Hot black tea containing the dipeptide sweetening composition (D) | Control |
|---|---|---|
| Choice | 16* | 4 |
| Evaluation | rounded sweetness | astringency can be perceived |

*There is a significant difference with 5% of risk ratio.

Having now fully described this invention, it will be apparent to one of ordinary skill in the art that many changes and modifications can be made thereto without departing from the spirit or scope of the invention set forth herein.

**Claims**

1. A dipeptide sweetening composition, comprising:

(a) 100% by wt of dipeptide sweetener and
(b) at least one kind of flavoring agents, in an amount sufficient to impart the tasting strength equal to that of 10 to 200% by wt of monosodium L-glutamate based upon the weight of the dipeptide sweetener, selected from the group consisting of sodium glutamate, sodium inosine-5'-phosphate, sodium guanosine-5'-phosphate and sodium aspartate.

2. The dipeptide sweetening composition of claim 1, wherein the amount of ingredient (b) is sufficient to impart the tasting strength equal to that of 75 to 125% by wt of monosodium L-glutamate based upon the weight of the dipeptide sweetener.

3. The use of a dipeptide sweetening composition of any of the claims 1 or 2 for sweetening food, beverages or pharmaceutical compositions.

**Patentansprüche**

1. Dipeptid-Süßmittelzusammensetzung, enthaltend:

(a) 100 Gew.-% eines Dipeptid-Süßmittels und
(b) mindestens eine Art eines Würzmittels in einer solchen Menge, die ausreicht, um die gleiche Geschmacksintensität zu erreichen, wie mit 10 bis 200 Gew.-% Mononatrium-L-glutamat, bezogen auf das Gewicht des Dipeptid-Süßmittels, wobei das Würzmittel ausgewählt ist aus der Gruppe aus Natriumglutamat, Natrium-inosin-5'-phosphat, Natrium-guanosin-5'-phosphat und Natriumaspartat.

2. Dipeptid-Süßmittelzusammensetzung nach Anspruch 1, worin die Menge des Bestandteils (b) ausreicht, um die gleiche Geschmacksintensität zu erreichen, die mit 75 bis 125 Gew.-% Mononatrium-L-glutamat, bezogen auf das Gewicht des Dipeptid-Süßmittels.

3. Verwendung einer Dipeptid-Süßmittelzusammensetzung nach einem der Ansprüche 1 oder 2 zum Süßen von Nahrungsmitteln, Getränken oder pharmazeutischen Zusammensetzungen.

**Revendications**

1. Composition édulcorante dipeptidique caractérisée en ce qu'elle comprend:

a) 100% en poids d'un édulcorant dipeptidique, et
b) au moins une sorte d'agents aromatisants, en une quantité suffisante pour impartir une force de saveur égale à celle de 10 à 200% en poids de L-glutamate monosodique, par rapport au poids de l'édulcorant dipeptidique, choisis dans le groupe comprenant le glutamate de sodium, l'inosine-5'-phosphate de sodium, la guanosine-5'-phosphate de sodium et l'aspartate de sodium.

2. Composition édulcorante dipeptidique selon la revendication 1, caractérisée en ce que la quantité d'ingrédient (b) est suffisante pour impartir la force de saveur égale à celle de 75 à 125% en poids de L-glutamate monosodique, par rapport au poids de l'édulcorant dipeptidique.

3. Utilisation d'une composition édulcorante dipeptidique, selon l'une des revendications 1 ou 2, pour l'édulcoration de produits alimentaires, de boissons ou de compositions pharmaceutiques.